Europäisches Patentamt

European Patent Office

Office européen des brevets

(19)

(11) Veröffentlichungsnummer : **0 015 031**
**B1**

(12) **EUROPÄISCHE PATENTSCHRIFT**

(45) Veröffentlichungstag der Patentschrift :
**15.12.82**

(21) Anmeldenummer : **80200127.1**

(22) Anmeldetag : **14.02.80**

(51) Int. Cl.³ : **G 11 B  5/09, H 04 L  7/02**

(54) **Anordnung für die Taktgebersynchronisation mittels eines seriellen Datensignals.**

(30) Priorität : **17.02.79 DE 2906200**

(43) Veröffentlichungstag der Anmeldung :
**03.09.80 (Patentblatt 80/18)**

(45) Bekanntmachung des Hinweises auf die Patenterteilung : **15.12.82 Patentblatt 82/50**

(84) Benannte Vertragsstaaten :
**AT DE FR GB IT SE**

(56) Entgegenhaltungen :
**FR A 2 182 799**
**US A 3 271 688**
**US A 3 609 408**
**US A 3 778 793**
**US A 3 805 180**
**US A 3 882 540**
**US A 3 898 574**
**US A 3 898 580**
**US A 3 982 194**
**US A 3 982 195**

**ELECTRONIC DESIGN, Band 26, Nr. 6, 15. März 1978, Selten 84-87 Rochelle Park, U.S.A. GHOSH : « The bandwidth of phaselock loops ».**
**IBM TECHNICAL DISCLOSURE BULLETIN, Band 16, Nr. 3, August 1973, Selte 837 New York, U.S.A. BRANDNER et al. : « Synchronizer for valid distorted periodic or aperiodic data ».**

(73) Patentinhaber : **Philips Patentverwaltung GmbH**
**Steindamm 94**
**D-2000 Hamburg 1 (DE)**
**DE**
**N.V. Philips' Gloeilampenfabrieken**
**Groenewoudseweg 1**
**NL-5621 BA Elndhoven (NL)**
**FR GB IT SE AT**

(72) Erfinder : **Ginsberg, Martin,**
**Heinrich-Heine-Strasse 16**
**D-5244 Daaden (DE)**
Erfinder : **Janak, Miloslav, Dipl.-Ing.**
**1472 Lewiston Drive**
**Sunnyvale California 94087 (US)**
Erfinder : **Reiners, Albrecht**
**Im Steingarten 11**
**D-5900 Slegen 1 (DE)**

(74) Vertreter : **Poddig, Dieter et al**
**Philips Patentverwaltung GmbH Steindamm 94**
**D-2000 Hamburg 1 (DE)**

## Anordnung für die Taktgebersynchronisation mittels eines seriellen Datensignals

### Bereich der Erfindung

Die Erfindung betrifft eine Anordnung zum Synchronisieren eines Taktgebers auf ein serielles Datensignal, das aufeinanderfolgende Bitzellen mit nominal gleichen Zeitlängen und das mindestens einen Signalübergang innerhalb einer Folge einer vorgegebenen festen Anzahl direkt aufeinanderfolgender Bitzellen enthält, wobei diese Anordnung

a) ein Taktgeberschaltung zum Erzeugen eines Taktimpulszuges, dessen Frequenz bzw. Phase von einem Steuersignal an Steuereingang der Taktgeberschaltung gesteuert wird ;

b) eine Taktimpulsextrahiereinrichtung zum Erzeugen eines Lesetaktimpulszuges aus dem Datensignal ;

c) einen Phasenvergleicher zum Empfangen eines aus dem Taktimpulszug abgeleiteten Steuertaktimpulszuges und des Lesetaktimpulszuges und zum Abgeben eines Phasendifferenzsignals ;

d) ein Tiefpaßfilter zum Empfangen des erwähnten Phasendifferenzsignals und zur Bildung des Steuersignals für den erwähnten Steuereingang enthält und die Regelschleife in einer ersten Stellung eine schnelle Synchronisation und in einer zweiten Stellung eine langsame Änderung der Frequenz der Taktgeberschaltung bewirkt.

Eine derartige Anordnung ist aus der US-PS 3 898 580 bekannt. Bei dieser bekannten Anordnung wird beim Lesen der Daten von einer Magnetplatte über eine phasenverriegelte Schleife der Oszillator mit dem von der Magnetplatte gelesenen Signal synchronisiert. Da beim Umschalten von Schreiben auf Lesen ein Phasensprung auftreten kann, ist die phasenverriegelte Schleife durch Veränderung der Verstärkung des Regelverstärkers darin auf einen großen Fangbereich für die Synchronisation des Oszillators eingestellt, und nach einer vorgegebenen Zeitdauer wird die Schleife auf einen kleinen Fangbereich umgeschaltet, so daß die Oszillatorfrequenz nur langsam geändert wird une damit gegenüber Störsignalen stabil ist. Die Zeitdauer, die bei dieser bekannten Anordnung für die Synchronisierung des Oszillators im ungünstigsten Fall notwendig ist, ist jedoch für manche Anwendungsfälle und Datenkodierungen noch zu lang.

Nach einer vorteilhaften Codierung der Daten enthält jede Bitzelle einen Signalübergang am Anfang der Bitzelle, wenn die Information einen ersten Wert besitzt, und der andere Informationswert wird dann entweder durch einen Signalübergang in der Mitte der Bitzelle oder durch keinen Signalübergang dargestellt. Für Informationsregeneration muß dabei ein Steuertaktimpulszug erzeugt werden, der jede Bitzelle in beiden Hälften einmal abfragt, um so die beiden Informationswerte decodieren zu können.

Auf solchen, in allgemein mechanisch angetriebenen, magnetischen Medien (Aufzeichnungsträgern) werden die Informationsbits gruppenweise gespeichert. Eine derartige Gruppe wird auch mit « Sektor » benannt, und häufig ist jeder Sektor einzeln adressierbar. Es gibt Toleranzen im Antrieb des Mediums. Außerdem werden die einzelnen Sektoren nicht gemeinsam gespeichert, insbesondere erfolgt in vielen Fällen das Lesen und Neueinschreiben der ausgewählten Sektoren einzeln. Hierdurch erfolgt bei einem Übergang von einem Sektor zum folgenden im allgemeinen sowohl ein Frequenzsprung als auch ein Phasensprung. Zur Verwirklichung einer guten Lesemöglichkeit enthält jeder Sektor am Anfang eine Synchronisationsinformationsmenge, die den eigentlichen Daten vorangeht und zum Nachregeln des Taktgebers sowohl in der Phase als auch in der Frequenz benutzt wird. Um den Raumbedarf möglichst gering zu halten, muß die physikalische Länge der Synchronisationsinformation beschränkt sein, und die Folge davon ist wieder, daß das Nachregeln des Taktgebers nur wenig Zeit nehmen darf. Es ist also notwendig, daß der Taktgeber sowohl die Phase als auch die Frequenz schnell ändern können muß.

Zum anderen hat die eigentliche Dateninformation einen beliebigen Inhalt. Es treten darin die Signalübergänge nicht gerade am Anfang bzw. in der Mitte einer Bitzelle auf : Diese Übergänge können bis zu einer Viertel Bitzelle in bezug auf den nominalen Zeitpunkt verschoben sein, wobei die Änderung von Bitzelle zu Bitzelle verschieden sein kann. Letztgenannte Differenzen können dabei u.a. vom Informationsinhalt abhängen. Diese Differenzen sind derart, daß sie im Mittel sich über eine Anzahl aufeinanderfolgender Bitzellen ausgleichen, d.h. die mittlere Länge einer Bitzelle ist weitgehend konstant. Damit dennoch die Information auf geeignete Weise gelesen werden kann, muß der Abfragetakt sehr konstant sein und darf sich nur langsam ändern, insbesondere zur Anpassung an Geschwindigkeitsänderungen des Aufzeichnungsträgers. Hier muß die Frequenz des Taktgebers also im wesentlichen stabil bleiben. Es gibt also einen Widerspruch zwischen folgenden zwei Forderungen, daß

a) während des Synchronisiervorganges sich die Frequenz/Phase des Taktgebers schnell anpassen können müssen,

b) beim Lesen der Dateninformation die Frequenz im wesentlichen konstant sein muß.

### Darstellung der Erfindung

Aufgabe der Erfindung ist es daher, eine Anordnung zum Synchronisieren der eingangs erwähnten Art anzugeben, die während des Synchronisiervorgangs eine sehr kurze Einregelzeit benötigt, jedoch beim folgenden Lesen der Informationen nur langfristigen Änderungen der Bitzellenfrequenz folgt.

Diese Aufgabe wird erfindungsgemäß dadurch gelöst, daß bei einem Datensignal, das in Abhängigkeit von den darin enthaltenen Dateninformationen sowohl am Anfang als auch in der Mitte einer Bitzelle Signalübergänge enthalten kann, in der ersten Stellung als Lesetaktimpulszug jeweils direkt ein Impulselement unter der Steuerung eines jeden Signalüberganges des Datensignals und außerdem jeweils ein gleiches Impulselement nach einer halben Bitzelle von der Taktimpulextrahiereinrichtung einem ersten Eingang des Phasenvergleichers zugeführt wird, wobei ein zweiter Eingang des Phasenvergleichers mit einem Ausgang einer Taktimpulssteuerschaltung zum Empfangen des aus dem Taktimpulzug abgeleiteten Steuertaktimpulzuges mit einer Nennfrequenz (1 MHz), die die zweifache Bitfrequenz darstellt, verbunden und das erwähnte Tiefpaßfilter auf eine erste Grenzfrequenz eingestellt ist, daß eine Detektorschaltung zum Detektieren der unter der Steuerung des Taktimpulzuges abgefragten Bits des Datensignals und zum Erzeugen eines Synchronisationssignals vorgesehen ist und daß ein Ausgang für das erwähnte Synchronisationssignal mit Eingängen sowohl der Taktimpulsextrahiereinrichtung als auch der Taktimpulssteuerschaltung zum Aktivieren der zweiten Stellung verbunden ist, in der sowohl die Taktimpulsextrahiereinrichtung als auch die Taktimpulssteuerschaltung eingestellt sind, um unter der Steuerung eines jeden Signalübergangs des Datensignals jeweils nur ein einziges Impulselement des Lesetaktimpulzuges bzw. des Steuertaktimpulzuges zu erzeugen, und bei der das erwähnte Tiefpaßfilter auf eine zweite, niedrigere Grenzfrequenz umgeschaltet wird. Bei dieser erfindungsgemäßen Anordnung treten während des Synchronisiervorgangs am Ausgang des Phasenvergleichers die Signale mit doppelter Häufigkeit auf, wodurch jeweils ein Hinweis auf die Phasendifferenz gegeben wird. Hierdurch kann das Tiefpaßfilter eine hohe Grenzfrequenz haben und dennoch eine weitgehend geglättete Ausgangsspannung beispielsweise zur Steuerung der spannungsgesteuerten Taktgeberschaltung erzeugen. Dadurch wird der Synchronisiervorgang beschleunigt, während im synchronisierten Verhalten durch die Kombination der niedrigen Grenzfrequenz des Tiefpaßfilters und der geringeren Anzahl von Phasenvergleichen nur eine langsame Frequenzänderung des Oszillators stattfinden kann.

Aus der US-PS 3 898 574 ist eine Anordnung zum Lesen von Daten von einem magnetischen Plattenspeicher bekannt, bei dem ebenfalls ein Oszillator mit dem vom Plattenspeicher abgelesenen Signal synchronisiert wird. Dafür werden eine Anzahl Leseimpulse unterdrückt und dann zwischen zwei aufeinanderfolgenden Leseimpulsen eine Frequenzmessung zur Einstellung des Oszillators und anschließend die weitere Synchronisierung über eine Phasenvergleichsstufe und einen Tiefpaß vorgenommen. Dabei werden die Zeitintervalle bei der Synchronisierung von den Lesesignalen bestimmt.

Aus der Zeitschrift « Electronic Design », Heft 6 vom 15.3.78, ist auf den Seiten 84 bis 87 ausgeführt, welche Anforderungen an die Bandbreite von phasenverriegelten Schleifen bei der synchronen Datenübertragung gelten. Danach soll die Bandbreite zunächst groß und danach klein sein. Diese Umschaltung der Bandbreite der phasenverriegelten Schleife wird dabei durch Umschalten der Grenzfrequenz des Tiefpaßfilters durchgeführt. Auch hierbei erfordert die Synchronisierung des über die phasenverriegelte Schleife gesteuerten Oszillators im ungünstigsten Falle eine zu lange Zeit.

Es ist bei der Erfindung nicht notwendig, daß während des Synchronisiervorganges die Elemente des Lesetaktimpulzuges, die nicht direkt unter der Steuerung eines Singalüberganges des Datensignals gebildet sind, genau eine halbe wirksame Bitzelle später kommen, denn wichtig ist vor allem die möglichst häufige Erzeugung der Phasenvergleichssignale. Es ist daher vorteilhaft, wenn die Taktimpulsextrahiereinrichtung einen Takteingang zum Empfangen eines zweiten Steuertaktimpulzuges mit einer Nennfrequenz aus der Taktgeberschaltung besitzt, die die zweifache Bitzellenfrequenz überschreitet und aus der in Zusammenarbeit mit einem Signalübergang des Datensignals ein gegenüber diesem Signalübergang verzögertes Impulselement des Lesetaktimpulzuges gebildet wird. Wenn in diesem Fall die Frequenz des erstgenannten Steuertaktimpulzuges (CP) von der doppelten Bitzellenfrequenz abweicht, liegen die so entwickelten Lesetaktimpulse nicht genau im Abstand einer halben Bitzelle, jedoch wird diese Ungenauigkeit um so geringer, je weiter der Synchronisiervorgang fortschreitet und die Frequenz des Steuertaktimpulzuges sich der Bitzellenfrequenz annähert. Durch diese Ungenauigkeit wird also die Geschwindigkeit der Synchronisation praktisch nicht negativ beeinflußt.

Es ist vorteilhaft, wenn die Taktimpulsextrahiereinrichtung einen Zähler mit einem Setzeingang enthält, der unter der Steuerung jedes Signalübergangs im Datensignal in eine vorgegebene Anfangsstellung gesetzt wird und der den zweiten Steuertaktimpulzug als Vorwärtszählsignal erhält und vor dem Erreichen einer vorgegebenen Endstellung einen ersten, jedoch danach einen zweiten Signalwert des erwähnten Lesetaktimpulzuges abgibt, und daß ein Blockierelement vorgesehen ist, das den Zähler in der zweiten Stellung der Anordnung nach dem Erreichen der vorgegebenen Zählerstellung blockiert. Wenn der Unterschied zwischen den Zählerstellungen z.B. einem Viertel der Länge einer Bitzelle entspricht und der Phasenvergleicher jeweils das Ende eines Impulselements des Lesetaktimpulzuges mit einem Steuertaktimpuls des Taktgebers vergleicht, so kann dieses letzte Signal als Abfragesignal bei der Informationsauswertung verwendet werden.

Bei einer erfindungsgemäßen Anordnung, die als Tiefpassfilter ein RC-Filter enthält, ist es vorteilhaft, wenn die Änderung der Grenzfrequenz des Tiefpassfilters durch Zu- bzw. Abschalten eines zusätzlichen Widerstands (R2) erfolgt. Auf diese Weise lässt sich die Grenzfrequenz besonders leicht ändern. Vorteilhaft ist es dabei, daß das Zu- bzw. Abschalten des zusätzlichen Widerstands durch einen damit in Reihe liegenden Opto-Koppler gesteuert ist. Auf diese Weise kann der erwähnte Widerstand leicht ohne galvanische Kopplung geschaltet werden. Auch die Verwendung eines Feldeffekt-Transistors ist statt dessen möglich.

Beschreibung der Ausführungsbeispiele

Ausführungsbeispiele der Erfindung werden nachstehend anhand der Zeichnung erläutert. Es zeigen

Figur 1 als Beispiel einige Details des auf dem Medium vorhandenen Datensignals,

Figur 2 ein Blockschaltbild einer bevorzugten Ausführungsform nach der Erfindung,

Figur 3 ein Impulsdiagramm zur Erläuterung der Erzeugung zusätzlicher Datentaktsignale,

Figur 4 den Aufbau des Tiefpassfilters,

Figur 5 ein Impulsdiagramm zur Erläuterung der Phasenregelung im synchronisierten Zustand.

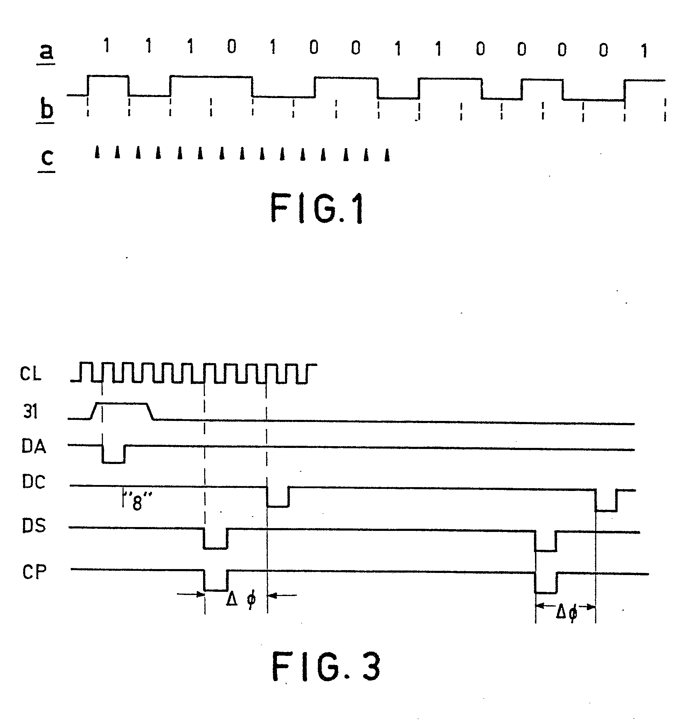

In Fig. 1 sind als Beispiel einige Details des am Medium vorhandenen Informationssignal dargestellt. Unter a) ist die gespeicherte Information in Form einer Bitreihe und bei b) das Muster der zweiwertigen Größe des Mediums angegeben, in dem die erwähnte Information verkörpert ist, und zwar in der Form wie sie für digitale Verarbeitung für einen Anwender verfügbar wird, faktisch also am Ausgang eines Aufnahmeelements. Integrierende und differenzierende Effekte in einem derartigen Aufnahmeelement sind somit bereits verarbeitet. Durch vertikale, gestrichelte Linien sind die Grenzen der Bitzellen angegeben ; jede Bitzelle enthält also ein Datenbit. Eine logische « 1 » wird durch einen Signalübergang am Anfang einer Bitzelle und eine logische « 0 » durch einen Übergang in der Mitte einer Bitzelle erzeugt. Wenn jedoch eine « 0 » von einer « 1 » direkt gefolgt wird, unterbleibt der letztgenannte Übergang. Bei c) sind die optimalen Abfragezeitpunkte für das Signal bei b) angegeben. Durch diesen Aufbau darf eine gegenseitige Verschiebung von ± 1/4 Bitzelle zwischen den optimalen und reellen Abfragezeitpunkte auftreten, ohne daß Fehler entstehen. Zum anderen können auch die Übergänge um ± 1/4 Bitzelle gegen die nominalen Übergänge verschoben sein, ohne daß Fehler entstehen. Auf entsprechende Weise bestehen andere Codes, die folgende Eigenschaften gemeinsam haben.

a) je Bitzelle reicht im Grunde zweimaliges Abfragen aus zum Detektieren des zugeordneten Informationswerts ;

b) Signalübergänge können sowohl am Anfang als auch in der Mitte der Bitzelle auftreten ;

c) der Zeitraum zwischen zwei aufeinanderfolgenden Übergängen ist begrenzt, im obigen Beispiel auf einen Höchstwert von zwei Bitzellenzeiten.

Es gibt auch solche Codes, bei denen einmaliges Abfragen zum Rekonstruieren der Dateninformationen ausreicht.

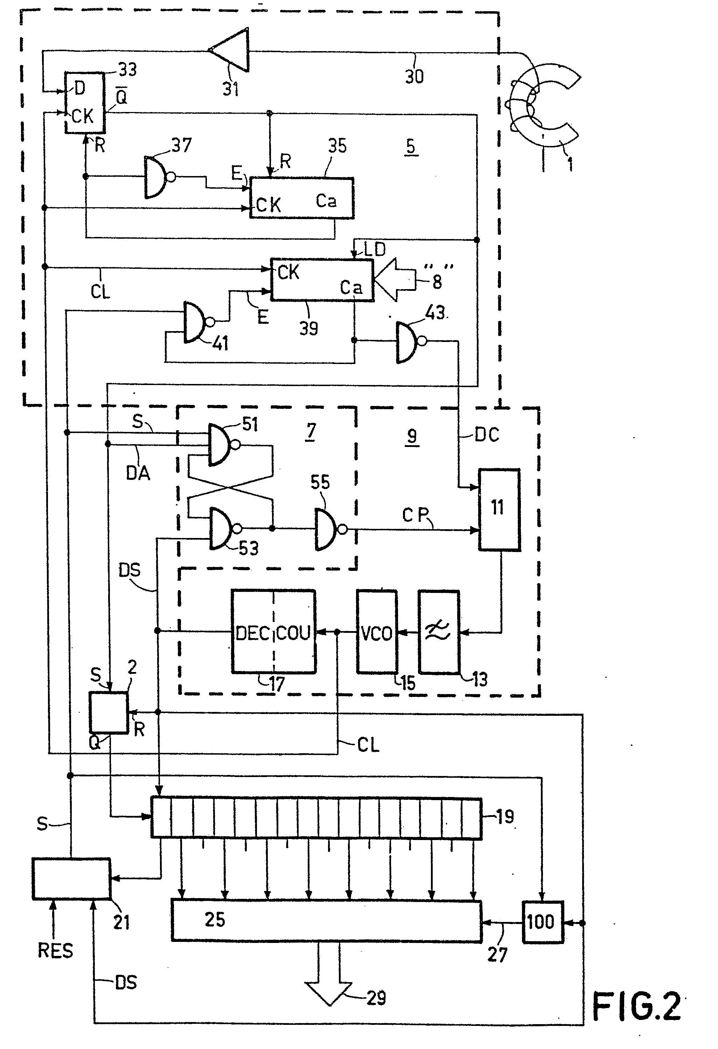

In Fig. 2 ist ein Blockschaltbild einer bevorzugten Ausführungsform nach der Erfindung dargestellt. Die Schaltung enthält folgende Elemente bzw. Untersysteme : einen Lesekopf 1, eine Taktimpulsextrahierschaltung 5, eine Taktimpulsgeneratorschaltung 9, eine Taktimpulssteuerschaltung 7, ein Schieberegister 19, eine Setz-Rückstell-Kippstufe 2, eine Detektoschaltung 21 und einen Parallelschalter 25.

Die Impulsformerschaltung enthält einen Verstärker 31, eine Daten-(D)-Kippstufe 33, zwei Umkehrstufen 37 und 43, zwei Zähler 35 und 39 sowie ein logisches NICHT-UND-Gatter 41.

Die Taktimpulsgeneratorschaltung 9 enthält die Teile Phasenvergleicher 11, Tiefpassfilter 13, spannungsgesteuerten Oszillator 15 sowie einen Zähler mit daran angeschlossenen Decoder 17, wobei die letzteren beiden Elemente 15 und 17 die Taktgeberschaltung darstellen.

Die Taktimpulssteuerschaltung enthält zwei logische NICHT-UND-Gatter 51, 53 und eine Jmkehrstufe 55.

In der Schaltung nach Fig. 2 ist das Element 1 ein schematisch angegebener Lesekopf für ein auf mechanische Weise entlang diesem Lesekopf antreibbares magnetisches Medium, zum Beispiel eine sog. Floppy Disk ; diese letzte ist der Kürze halber nicht dargestellt. Die Anordnung zum Einstellen des Lesekopfs und zum Festhalten dieser Einstellung auf eine bestimmte Spur einer derartigen Floppy Disk bildet keinen Teil der Erfindung. Im Ausführungsbeispiel entspricht jede Bitzelle nominal einem Intervall von 2 Mikrosekunden.

Die so auf der Leitung 30 des Lesekopfs ankommenden Signale gelangen über den Verstärker 31 zum D-Eingang der Kippstufe 33. Im Verstärker werden die Signale verstärkt und begrenzt, so daß sie die geeigneten Werte für den Baustein 33 vom Typ SN7474 haben. Der Takteingang CK empfängt Taktimpulse aus der Taktimpulsgeneratorschaltung 9. Wie weiter un- ten erläutert, erzeugt die Taktimpulsextrahier- einrichtung 5 mit Hilfe der erhaltenen Taktimpulsreihe CL des Oszillators 15 ein damit synchronisiertes Datensignal auf der Leitung DA. Weiter erzeugt die Taktimpulsextrahiereinrichtung 5 einen Lesetaktimpulszug auf der Leitung DC und arbeitet also mit als Taktimpulsextrahiereinrichtung. Die Leitung DC ist mit einem der Eingänge des Phasenvergleichers 11 verbunden. Der andere Eingang des Phasenvergleichers 11 ist mit der Leitung CP verbunden. Das Signal auf dieser Leitung ist von einem Ausgangssignal DS der Taktgeberschaltung 15, 17, abgeleitet.

Der Ausgang des Phasenvergleichers 11 ist über das Tiefpassfilter 13 (mit umschaltbarer Grenzfrequenz) mit einem Eingang eines spannungsgesteuerten Oszillators 15 mit einer Ausgangs-Nenfrequenz von 16 MHz verbunden. Auf diese Weise wird auf der Ausgangsleitung ein (zweiter) Steuertaktimpulszug CL erzeugt, d.h. mit einer Frequenz, die ein Vielfaches der Bitzellenfrequenz ist (letztere ist, wie bereits vorausgesetzt, gleich 500 kHz Nennwert). Die Taktimpulsfolge CL gelangt zur Taktimpulsextrahierschaltung 5, dem Zähler mit angekoppeltem Decoder 17, und kann weiter über eine nicht dargestellte Verbindung zur weiteren Benutzung herausgeführt werden. Im Decoder 17 wird die erhaltene Impulsfolge durch 16 geteilt, wobei sich der Decoderteil zum jeweiligen Erzeugen einer Anzahl gegenseitig phasenverschobener Taktsignale mit einer Wiederholfrequenz von 1 MHz eignet. Für die ggf. verschiedenen Taktimpulsfolgen ist hier lediglich der Ausgang DS für den Taktimpulszug abgebildet. Dieses Signal hat also eine zweimal höhere Wiederholfrequenz als die nominale Bitzellenfrequenz.

Der Taktimpulszug DS gelangt zunächst zum Rückstelleingang R der Setz-Rückstell-Kippstufe 2. Der Setzeingang S dieser Kippstufe empfängt das Datensignal DA. Wie weiter unten erläutert, ist das Datensignal DA jeweils nur eine kurze Zeit vorhanden. Die Kippstufe 2 arbeitet dabei als Puffer. Gleichzeitig mit dem Auftreten des Signals DS wird die Kippstufe 2 jeweils zurückgestellt und die darin enthaltene Information in die erste Stufe des Schieberegisters 19 übernommen.

Gemäß der nachfolgenden Beschreibung tritt der Taktimpulszug DS im synchronisierten Zustand jeweils kurz vor dem Ende des ersten bzw. des dritten Viertels einer Bitzelle auf. Alle Signalübergänge der Daten, die am Anfang bzw. in der Mitte der Bitzelle auftreten, werden daher bei der maximal zulässigen Verschiebung noch auf geeignete Weise detektiert.

Die Synchronisationsinformation, mit der ein auf dem Medium gespeicherter Sektor anfängt, beginnt nach einer vorteilhaften Standardisierung mit einer vorgegebenen Byte-Anzahl, die je den Wert FF(11111111) besitzen, wodurch eine maximale Anzahl der Signalübergänge in diesem Teil gewährleistet ist. Es folgt dann ein spezielles Muster von Übergängen in der Magnetisierung, das nicht mit einem der zugelassenen Codewörter, die Information enthalten, verknüpft ist. Dieses spezielle Muster ist dabei eindeutig von der nachfolgenden, eigentlichen Information unterscheidbar. Das erwähnte Muster hat beispielsweise die Form : 0100100010010001, wobei jede « 1 » einen Übergang im zweiwertigen Zustand des Mediums bedeutet (dies weicht also von der bei Fig. 1 erwähnten Codierung der Daten ab). In der Synchronisationsinformation treten dabei jeweils die Datensignalübergänge und somit auch das Datensignal DA jeweils mit Zeitintervallen von einer Bitzelle auf. So erhalten die Stufen des Schieberegisters 19 wegen der doppelten Bitzellenfrequenz des Datenabtastsignals DS abwechselnd die Information « 0 » und « 1 ». Der Ausgang der ersten Stufe des Schieberegisters 19 ist nun mit einer Prüfschaltung 21 verbunden, die sich zum Detektieren der erwähnten Synchronisationsinformation eignet.

In der bevorzugten Ausführungsform enthält die Detektorschaltung 21 einen kleinen Festwertspeicher mit direktem Zugriff. Der Datenausgang ist mit dem Eingang einer Vierbit-Triggerschaltung verbunden, die nicht gesondert angegeben ist. Deren Ausgänge bilden einen Teil der Adress-Signale des letztgenannten Speichers. Ein weiterer Adressteil wird durch das erhaltene Datensignal gebildet. Wenn die Triggerschaltung durch ein Signal am Eingang RES auf Null gesetzt wird, wird bei der Adresse 0 des Speichers gestartet. Wenn das erste Informationsbit und damit die letzte Adress-Stelle richtig ist, gibt der Speicher ein Wort aus, das die nächste Adresse angibt, in der das folgende Informationsbit geprüft wird. Falls ein einziges Informationsbit in der Folge nicht richtig ist, kommt der Speicher auf eine Adresse, bei der wieder die Anfangsadresse des Speichers ausgegeben wird. Wenn alle Informationsbits richtig waren, bleibt der Speicher auf der letzten Adresse stehen, d.h. in der letzten Adresse steht wieder als Inhalt die letzte Adresse, und gleichzeitig erscheint auf einem weiteren Ausgang des Speichers erst bei dieser Adresse eine 1. Dies ist die Leitung S. So erreicht die Detektorschaltung 21 einen Endzustand, wobei die Prüfschaltung anstatt eines Festwertspeichers auch eine andere Art von sequentieller Schaltung enthalten kann. Dieser Endzustand wird nur unter der Steuerung eines Rückstellsignals verlassen, das am Eingang RES erscheint. Dieses Rückstellsignal kann von jedem folgenden Lesesteuersignal abgeleitet werden, das das Auslesen eines Informationssektors steuert. Im erwähnten Endzustand erzeugt die Detektorschaltung 21 ein Signal auf der Ausgangsleitung S : Dies gibt an, daß die Synchronisation verwirklicht ist. Es steuert auch die Taktimpulstrahierschaltung 5, die Taktimpulssteuerschaltung 7 sowie das Tiefpassfilter 13, wie nachstehend näher erläutert wird.

Der Ausgang jeder zweiten Stufe des Schieberegisters 19 ist ferner mit einem Eingang der Durchschaltanordnung 25 (Parallelschalter) verbunden, die mit einem Signal auf der Leitung 27 gesteuert wird. Dieses letzte Signal wird einfach durch ein Ausgangssignal des Zählers 100, der eine Zählkapazität von 16 hat und vom Signal DS getaktet wird (oder durch ein gleichartiges, dazu etwas in der Phase verschobenes Signal des Elements 17). Dieser Zähler wird vom Signal S freigegeben, das am Ende das Anfang-(« mark »)-Musters erscheint. Das Ausgangsübertragungssignal des Zählers 100 wird dabei genau am Ende eines jeden folgenden 8-Bit-Wort erzeugt.

So werden die Datensignale der betreffenden Ausgänge des Schieberegisters 19 zur Busleitung 29 durchgeschaltet. Das Schieberegister hat bei 8-Bit-Wörtern gerade zweimal soviel (16) Stufen durch die zweifache Abtastfrequenz des Datenabtastsignals DS. Wenn die zeitliche Lage des Steuersignals der Leitung 27 so gewählt ist, daß die zu Beginn der ersten Bitzelle eines Da-

tenworts auf den Aufzeichnungträger abgetastete Information gerade die letzte Stufe des Schieberegisters 19 erreicht hat, stellen die am Ausgang 29 parallel erscheinenden Signale gerade ein vollständiges, vom Aufzeichnungträger gelesenes Datenwort dar.

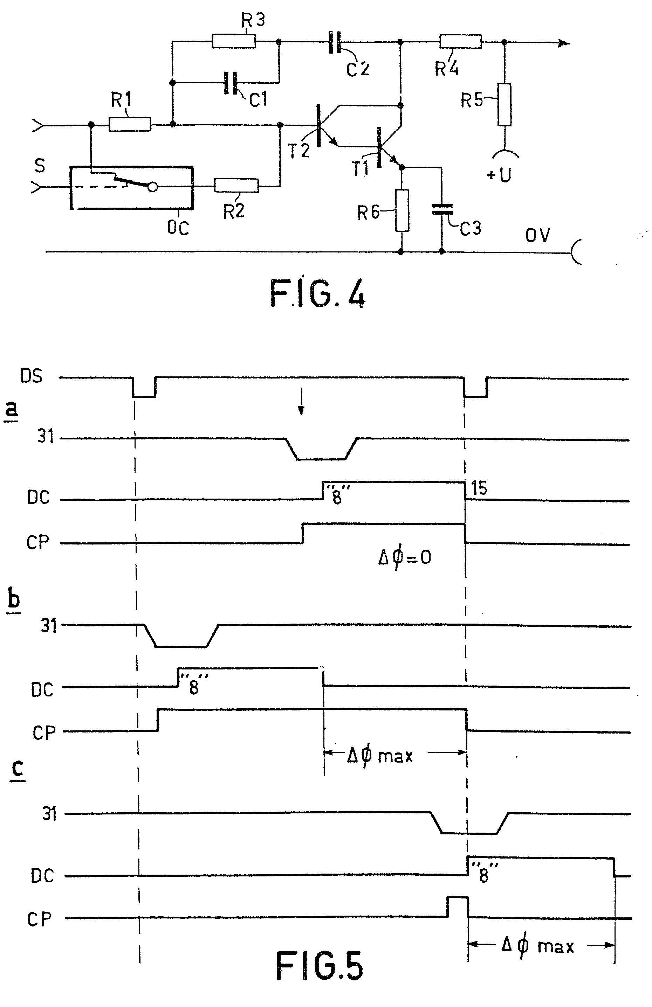

In Fig. 3 sind einige in der Taktextrahierschaltung 5 auftretende Signale dargestellt. Die erste Zeile zeigt die Taktimpulsfolge CL, die auf die angegebene Weise fortgesetzt wird. Die zweite Zeile stellt das vom Verstärker 31 erzeugte Signal dar. Mit der ersten positiven Flanke des Signals CL nach Beginn des Signals vom Verstärker 31 wird die Kippstufe 33 vom Typ SN 7474 gesetzt. Die dritte Zeile in Fig. 3 stellt das Signal DA dar, das am integrierten Ausgang Q dieser Kippstufe erscheint. Das Datensignal DA gelangt an die Elemente 2 und 51 und im Impulsformer selbst noch an den synchronen Rückstell-Eingang R eines 16-Zählers 35 vom Typ 74163. Weiter gelangt das Signal noch an den synchronen Setz-Eingang LD eines zweiten 16-Zählers 39 (auch 74163). Der letztere Zähler erhält an den Voreinstelleingängen eine Signalkombination entsprechend der Zählerstellung « 8 ».

Mit der nächsten positiven Flanke des Signals CL wird der Zähler 35 in die Nullstellung und der Zähler 39 in die Stellung « 8 » gestellt, was durch einen vertikalen Strich auf der vierten Zeile in Fig. 3 angegeben ist. Beim Zähler 35 wechselt dadurch das Signal am Übertragungsausgang Ca, so daß über den daran angeschlossenen Inverter 37 der Zählfreigabeeingang E freigegeben wird und der Zähler 35 mit dem Taktimpuls CL am Zähltakteingang CK von der Nullstellung zu zählen beginnt, bis er seine höchste Stellung 15 erreicht, bei der das Signal am Übertragungsausgang Ca wieder wechselt und über den Inverter 37 das weitere Zählen des Zählers 35 sperrt. Das Signal des Übertragsausgangs Ca wird auch dem Rückstell-Eingang R der D-Kippstufe 33 zugeführt und setzt diese zurück und hält es zurückgestellt, während der Zähler 35 zählt. Da die Zählzeit des Zählers 35 länger ist als die Impulsdauer des Lesesignals, wird eine Mehrfach-Detektion eines Lesesignalimpulses ausgeschlossen. Die D-Kippstufe 33 ist also nur während einer Taktperiode des Taktimpulses CL gesetzt, und entsprechend kurz ist daher auch das Datensignal DA.

Wie beschrieben, ist am Ende des negativen Impulses des Datensignals DA der Zähler 39 in die Stellung « 8 » gesetzt, wie in der vierten Zeile der Fig. 3 angedeutet ist. Da während des Synchronisiervorganges das Umschaltsignal auf der Leitung S niedrig ist, erzeugt das NAND-Gatter 41 am Ausgang immer ein hohes Signal, das dem Zählfreigabeeingang E des Zählers 39 zugeführt wird, so daß dieser ständig die am Zähltakteingang CK zugeführten Impulse des Signals CL zählt. Bei der höchsten Stellung 15 erzeugt der Zähler 39 am Übertragungsausgang CA ein Signal, das über den Inverter 43 als negativer Impuls über die Leitung DC als Lesetaktimpulzug herausgeführt wird.

Die Taktimpulssteuerung 7 enthält insbesondere zwei kreuzgekoppelte NAND-Glieder 51 und 53 sowie einen an den Ausgang des Verknüpfungsgliedes 53 angeschlossenen Inverter 55. Da im nicht synchronisierten Zustand das Umschaltsignal auf der Leitung S niedrig ist, erzeugt das NAND-Glied 51 am Ausgang immer ein hohes Signal, so daß das über die Leitung DS dem NAND-Glied 53 zugeführte Datenabtastsignal am Ausgang des Inverters 55 auf der Leitung CP als Lesetaktimpulzug nahezu unverändert erscheint, wie aus den letzten beiden Zeilen der Fig. 3 hervorgeht. Bei der hier willkürlich angenommenen zeitlichen Lage des Taktimpulzuges DS, die von der zufälligen Stellung des Taktgebers 9 in Fig. 2 bei Beginn der Synchronisation abhängt, ergibt sich zwischen den beiden dem Phasenvergleicher 11 in Fig. 2 zugeführten Signalen DC und CP eine Phasenverschiebung, die am Ausgang des Phasenvergleichers 11 und damit am Ausgang des Tiefpassfilters 13 ein derartiges Steuersignal für den spannungsgesteuerten Oszillator 15 erzeugen, daß dieser seine Frequenz erhöht und die Phasendifferenz verringert. Da die Signale DC und CP dem Phasenvergleicher immer paarweise zugeführt werden müssen und das letztere von dem Taktimpulzug DS abgeleitet ist, das die doppelte Bitzellenfrequenz hat, muß der Zähler 39 in Fig. 2 während jeder Bitzelle zweimal umlaufen, so daß bei Verwendung eines 16-Zählers, z.B. in Form eines 4-Bit-Dualzählers, die Frequenz des Taktimpulses CL das 32-fache der Bitzellenfrequenz sein muß.

Während des Synchronisiervorganges erfolgt also während jeder Bitzelle zweimal ein Phasenvergleich, wobei der Abstand der beiden in Fig. 3 dargestellten Impulse der Signale DC, DS und CP vor erfolgter Synchronisation nicht von der durch die momentane Geschwindigkeit des Aufzeichnungträgers bestimmte Bitzellenfrequenz, d.h. von dem Abstand der vom Verstärker 31 gelieferten Signale abhängt, sondern nur von der momentanen Frequenz des spannungsgesteuerten Oszillators 15, jedoch bleibt die Phasenverschiebung und damit das Korrektursignal des Phasenvergleichers praktisch gleich. Wegen dieser schnellen Folge der Ausgangssignale des Phasenvergleichers 11 kann die Grenzfrequenz des Tiefpassfilters 13 hoch sein, so daß der spannungsgesteuerte Oszillator 15 schnell auf die Ausgangssignale des Phasenvergleichers 11 reagieren kann und der Synchronisationsvorgang schnell erfolgt.

Ein Beispiel für ein Tiefpassfilter mit umschaltbarer Grenzfrequenz ist in Fig. 4 dargestellt. Die Schaltung enthält zwei Transistoren T1 und T2, weiter einen Widerstand 1 (4 300 Ohm), einen Widerstand R2 (2 200 Ohm), R3 (3 300 Ohm), einen Kondensator C1 (560 pF), einen Kondensator C2 (15 nF), einen Schalter OC, dazu die Widerstände R4, R5, R6 und den Kondensator C3, dessen Bemessung nicht kritisch ist. In diesem Tiefpassfilter zweiter Ordnung sind die Transistoren T1 und T2 als Darlington-Verstärker geschaltet. Durch die hohe Stromverstärkung bleibt der Spannungsabfall am Widerstand R1 durch den Basisstrom des Transistors T2 relativ klein. Der Emitter des Transistors T1 ist über eine RC-Kombination aus dem Widerstand R6 und dem parallel geschalteten Kondensator C3 mit großer Zeitkonstante mit OV verbunden, um einen günstigen Arbeitspunkt einzustellen. Die Kollektoren der beiden Transistoren T1 und T2 sind über die Reihenschaltung der beiden Widerstände R4 und R5 mit positiver Betriebsspannung verbunden, um an dem Verbindungspunkt dieser beiden Widerstände, der mit dem Steuereingang des spannungsgesteuerten Oszillators verbunden ist, den für dessen Steuerung günstigsten Pegel einzustellen.

Die Grenzfrequenz des Filters ist durch die Werte der Widerstände R1 bis R3 und der Kondensatoren C1 und C2 bestimmt, die zwischen dem Kollektor und der Basis des Transistors T2 bzw. in dessen Basiszuleitung eingefügt sind. Die Grenzfrequenz ist um so höher, je kleiner die Werte der Elemente sind. Der Widerstand R2 ist mittels der Schaltvorrichtung OC dem Widerstand R1 parallel geschaltet, so daß sich dadurch eine höhere Grenzfrequenz ergibt. Die Schaltvorrichtung OC wird von dem Umschaltsignal auf der Leitung S angesteuert und ist hier durch einen Optokoppler zum potentialfreien Schalten verwirklicht. Ein geeignetes Bauelement kann aus der Reihe TIL 102... 109 der Herstellung Texas Instrumens gewählt werden. Der Verbindungspunkt des Widerstands R1 mit der Schaltvorrichtung OC erhält die Ausgangssignale des Phasenvergleichers 11, und zwar während des Synchronisierungsvorganges mit hoher Folge, während der Schalter in der Schaltvorrichtung OC geschlossen und der Widerstand R2 dem Widerstand R1 zur Erzeugung einer hohen Grenzfrequenz parallel geschaltet ist. Nach Erreichen der Synchronisierung wird der Schalter in der Schaltvorrichtung OC geöffnet, und die Grenzfrequenz des Tiefpassfilters sinkt auf einen wesentlich geringeren Wert, so daß dessen Ausgangssignal an dem Verbindungspunkt der beiden Widerstände R4 und R5 der Änderung dert Eingangssignale nur langsam folgt.

Da der Zähler 39 in Fig. 2 bei jedem Datensignal auf die Stellung « 8 », d.h. auf die halbe maximale Stellung gesetzt wird und seine Umlaufzeit im synchronisierten Zustand eine halbe Bitzellenlänge ist, erscheint der Taktimpulszug auf der Leitung DC eine viertel Bitzellenlänge nach dem Datensignal. Da aber, wie beschrieben wurde, der Taktgenerator 9 in Fig. 2 so arbeitet, daß der Lesetaktimpulszug DC und der Steuertaktimpulszug CP und damit der Taktimpulszug DS gleichzeitig auftreten, erscheint im synchronisierten Zustand der Taktimpulszug DS etwa eine viertel Bitzellenlänge nach dem Beginn und der Mitte einer Bitzelle.

Das Setzen des Zählers 39 in Fig. 2 in die Stellung « 8 » mit jedem Datensignal wirkt sich im übrigen nur während des Synchronisiervorganges aus, wenn noch eine Differenz zwischen der Frequenz des Datenabtastsignals DS und der Bitzellenfrequenz besteht. Im synchronisierten Zustand entsteht jedoch ein anderer Ablauf, der anhand der Fig. 5 erläutert werden soll. In der ersten Zeile ist als Bezugssignal das Signal DS angegeben. Da dieses Signal um eine viertel Bitzelle gegenüber dem Beginn bzw. der Mitte einer Bitzelle verschoben ist, liegt der nominelle Zeitpunkt für den Beginn eines Datensignals in der Mitte zwischen zwei Impulsen des Datenabtastsignals, und dieser Punkt ist durch einen kleinen senkrechten Pfeil angegeben. Im synchronisierten Zustand ist ferner das Umschaltsignal auf der Leitung S hoch, so daß, wenn der Zähler 39 in Fig. 2 seine höchste Stellung erreicht hat und am Übertragungsausgang Ca ein hohes Signal erzeugt, der Ausgang des NAND-Gliedes 41 niedrig und damit der Zählfreibageeingang E des Zählers 39 gesperrt wird, so daß diese Endstellung erhalten bleibt und der Taktimpulszug auf der Leitung DC niedrig ist, bis ein neues Datensignal DA erscheint. Ferner arbeiten in Fig. 2 die beiden kreuzgekoppelten NAND-Glieder 51 und 53 wegen des hohen Signals auf der Leitung S als Kippstufe, die bei einem negativen Impuls auf der Leitung DA oder DS in die entsprechende Stellung geschaltet wird und diese Stellung auch nach dem Ende des entsprechenden negativen Impulses behält, bis ein negativer Impuls auf der jeweils anderen Leitung eintrifft.

Im Teil a) der Fig. 5 ist nun angenommen, daß der Beginn eines Datenzeichens kurz vor dem nominellen Zeitpunkt liegt, so daß mit dem nächsten positiven Signal des Taktimpulses CL die Kippstufe 33 umschaltet und einen negativen Datensignalimpuls auf der Leitung DA erzeugt. Durch dieses Signal wird in Fig. 2 der Ausgang des NAND-Glieds 51 hoch, damit wird der Ausgang des NAND-Gliedes 53 niedrig und der Steuertaktimpuls CP hoch, wie in Fig. 5a dargestellt ist. Mit der nächsten positiven Flanke des Taktimpulses CL wird dann der Zähler 39 in die Stellung « 8 » gesetzt und damit über das NAND-Glied 41 der Zählfreigabeeingang E freigegeben, so daß nun der Taktimpuls CL im Zähler 39 gezählt wird. Mit dem niedrigen Signal am Übertragsausgang Ca des Zählers 39 wird auch das Signal des Lesetaktimpulszuges DC am Ausgang des Inverters 43 hoch, wie ebenfalls in Fig. 5a dargestellt ist.

Der Zähler 39 zählt nun, bis er seine Endstellung erreicht, wobei wieder ein hohes Signal am Übertragsausgang CA erscheint, das die weitere Zählung sperrt und das Signal des Lesetaktimpulszuges DC auf den niedrigen Wert zurückschaltet. Wie in Fig. 5a zu erkennen ist, beginnt gleichzeitig ein negativer Impuls des Datenabtastsignals DS, so daß in Fig. 2 der Ausgang des NAND-Gliedes 53 hoch und damit das Signal des Steuertaktimpulszuges CP niedrig wird. Damit besteht zwischen den Rückflanken der beiden Signale DC und CP der Phasenunterschied = 0, so daß der Phasenvergleicher 11 in Fig. 1 kein Ausgangssignal abgibt und der spannungsgesteuerte Oszillator 15 nicht nachgeregelt wird.

Aufgrund verschiedener Ursachen kann nun der Beginn eines Datenbits um nahezu eine viertel Bitzellenlänge, das ist der halbe Abstand zwischen zwei Datenabtastsignalen, von dem nominellen Zeitpunkt abweichen, und zwar nach beiden Richtungen. In Fig. 5b ist nun angenommen, daß der Beginn eines Datenbits voreilt, so daß mit Ende des vorhergehenden Impulses des Taktimpulszuges DS bereits die Kippstufe 33 gesetzt und damit ein Datensignal DA erzeugt wird, das die Kippstufe (51/53) in Fig. 2 wieder umschaltet und ein hohes Taktphasensignal CP erzeugt. Mit der nächsten positiven Flanke des Taktsignals CL wird der Zähler 39 wieder in die Stellung « 8 » gesetzt, so daß das Signal des Lesetaktimpulszuges DC positiv wird. Der Zähler 39 erreicht nun jedoch seine Endstellung, bei der das Signal DC des Lesetaktimpulszuges wieder niedrig wird, eine wesentliche Zeit vor dem Auftreten des nächsten Impulses des Datenabtastsignals DS, mit dem die Kippstufe (51/53) in Fig. 2 zurückgeschaltet und das Signal CP des Steuertaktimpulszuges wieder auf einen niedrigen Wert gebracht wird. Damit tritt zwischen den Rückflanken der beiden Signale DC und CP die maximal mögliche Phasendifferenz $\Delta\varnothing_{max}$ auf, die noch verarbeitet werden kann. Diese Phasendifferenz erzeugt am Ausgang des Phasenvergleichers 11 ein entsprechendes Signal, das jedoch als einzelnes Signal wegen der niedrigen Grenzfrequenz des Tiefpassfilters 13 den spannungsgesteuerten Oszillator 15 nur wenig in der Frequenz erhöht, um die Phasendifferenz zu verringern, da im Grenzfall das nächste Datenbit um die maximale Zeit entgegengesetzt zum Nominalzeitpunkt verschoben sein kann.

Ein derartig verschobenes Datenzeichen aus dem Verstärker 31 in Fig. 2 ist in Fig. 5c angenommen. Mit der nächsten Flanke des Taktimpulses CL wird zwar wieder die Kippstufe 51/53 in Fig. 2 umgeschaltet und das Taktphasensignal hoch, jedoch tritt mit der danach folgenden Flanke des Taktimpulses CL bereits der negative Impuls des Datenabtastsignals DS auf, wodurch die Kippstufe in Fig. 3 wieder zurückgeschaltet und das Taktphasensignal niedrig wird. Gleichzeitig wird nun erst der Zähler 39 in die Stellung « 8 » gesetzt, und erst nach sieben Impulsen des Taktimpulses CL erreicht dieser seine Endstellung, womit das Signal des Lesetaktimpulszuges (DC) wieder niedrig wird. Dies ergibt den maximalen Phasenunterschied $\Delta\varnothing_{max}$, jedoch in der anderen Richtung. Der Phasenvergleicher 11 erzeugt zwar ein Signal entsprechend dieser Phasendifferenz, das jedoch als einzelnes Signal und wegen der niedrigen Grenzfrequenz des Filters ebenfalls den spannungsgesteuerten Oszillator 15 nur wenig beeinflusst, und zwar nun zur Verringerung der Frequenz.

Auf diese Weise wird eine schnelle Frequenz- und Phasenanpassung des spannungsgesteuerten Oszillators 15 während des Synchronisiervorganges erreicht, jedoch eine nur langsame Änderung der Frequenz im synchronisierten Zustand auch bei großen zusätzlichen Abweichungen des Auftrittszeitpunktes des Datenzeichens vom Nominalzeitpunkt.

**Ansprüche**

1. Anordnung zum Synchronisieren eines Taktgebers auf ein serielles Datensignal, das aufeinanderfolgende Bitzellen mit nominal gleichen Zeitlängen und das mindestens einen Signalübergang innerhalb einer Folge einer vorgegebenen festen Anzahl direkt aufeinanderfolgender Bitzellen enthält, wobei diese Anordnung

a) eine Taktgeberschaltung (16, 17) zum Erzeugen eines Taktimpulszuges (DS), dessen Frequenz bzw. Phase von einem Steuersignal am Steuereingang der Taktgeberschaltung gesteuert wird ;

b) eine Taktimpulsextrahiereinrichtung (5) zum Erzeugen eines Lesetaktimpulszuges (DC) aus dem Datensignal ;

c) einen Phasenvergleicher (11) zum Empfangen eines aus dem Taktimpulszug abgeleiteten Steuertaktimpulszuges (CP) und des Lesetaktimpulszuges (DC) und zum Abgeben eines Phasendifferenzsignals ;

d) ein Tiefpaßfilter (13) zum Empfangen des erwähnten Phasendifferenzsignals und zur Bildung des Steuersignals für den erwähnten Steuereingang enthält und die Regelschleife in einer ersten Stellung eine schnelle Synchronisation und in einer zweiten Stellung eine langsame Änderung der Frequenz der Taktgeberschaltung bewirkt, dadurch gekennzeichnet, daß bei einem Datensignal, das in Abhängigkeit von den darin enthaltenen Dateninformationen sowohl am Anfang als auch in der Mitte einer Bitzelle Signalübergänge enthalten kann, in der ersten Stellung als Lesetaktimpulszug (DC) jeweils direkt ein Impulselement unter der Steuerung eines jeden Signalüberganges des Datensignals und außerdem jeweils ein gleiches Impulselement nach einer halben Bitzelle von der Taktimpulsextrahiereinrichtung (5) einem ersten Eingang des Phasenvergleichers (11) zugeführt wird, wobei ein zweiter Eingang des Phasenvergleichers mit einem Ausgang einer Taktimpulssteuerschaltung (7) zum Empfangen des aus dem Taktimpulszug (DS) abgeleiteten Steuertaktimpulszuges (CP) mit einer Nennfrequenz (1 MHz), die die zweifache Bitfrequenz darstellt, verbunden und das erwähnte Tiefpaßfilter (13) auf eine erste Grenzfrequenz eingestellt ist, daß eine Detektorschaltung (21) zum Detektieren der unter der Steuerung des Taktimpulszuges (DS) abgefragten Bits des Datensignals und zum Erzeugen eines Synchronisationssignals (S) vorgesehen ist und daß ein Ausgang für das erwähnte Synchronisationssignal mit Eingängen sowohl der Taktimpulsextrahiereinrichtung als auch der Taktimpulssteuerschaltung (7) zum Aktivieren der zweiten Stellung verbunden ist, in der sowohl die Taktimpulsextrahiereinrichtung als auch die Taktimpulssteuerschaltung (7) eingestellt sind, um unter der Steuerung eines jeden Signalübergangs des Datensignals jeweils nur ein einziges Impulselement des Lesetaktimpulszuges bzw. des Steuertaktimpulszuges zu erzeugen, und bei der das erwähnte Tiefpaßfilter auf eine zweite, niedrigere Grenzfrequenz umgeschaltet wird.

2. Anordnung nach Anspruch 1, dadurch gekennzeichnet, daß die Taktimpulsextrahiereinrichtung einen Takteingang zum Empfangen eines zweiten Steuertaktimpulszuges (CL) mit einer Nennfrequenz aus der Taktgeberschaltung besitzt, die die zweifache Bitzellenfrequenz überschreitet und aus der in Zusammenarbeit mit einem Signalübergang des Datensignals ein gegenüber diesem Signalübergang verzögertes Impulselement des Lesetaktimpulszuges gebildet wird.

3. Anordnung nach Anspruch 2, dadurch gekennzeichnet, daß die Taktimpulsextrahiereinrichtung (5) einen Zähler (39) mit einem Setzeingang enthält, der unter der Steuerung jedes Signalübergangs im Datensignal in eine vorgegebene Anfangsstellung gesetzt wird und der den zweiten Steuertaktimpulszug als Vorwärtszählsignal erhält und vor dem Erreichen einer vorgegebenen Endstellung einen ersten, jedoch danach einen zweiten Signalwert des erwähnten Lesetaktimpulszuges abgibt, und daß ein Blockierelement (41) vorgesehen ist, das den Zähler in der zweiten Stellung der Anordnung nach dem Erreichen der vorgegebenen Zählerstellung blockiert.

4. Anordnung nach Anspruch 1, 2, oder 3, bei der das Tiefpaßfilter ein RC-Filter enthält, dadurch gekennzeichnet, daß die Änderung der Grenzfrequenz des Tiefpaßfilters durch Zu- bzw. Abschalten eines zusätzlichen Widerstandes (R2) erfolgt.

5. Anordnung nach Anspruch 4, dadurch gekennzeichnet, daß das Zu- bzw. Abschalten des zusätzlichen Widerstands (R2) durch einen damit in Reihe liegenden Opto-Koppler (OC) gesteuert ist.

## Claims

1. An apparatus for synchronizing a clock pulse generator with a serial data signal which comprises successive bit cells of nominally equal time length and at least one signal transition within a series of a predetermined, fixed number of directly successive bit cells, said apparatus comprising :
a) a clock pulse generator circuit (16, 17) for producing a clock pulse train (DS) whose frequency or phase is controlled by a control signal on the control input of the clock pulse generator circuit ;
b) a clock pulse extraction device (5) for producing a read clock pulse train (DC) from the data signal ;
c) a phase comparator (11) for receiving a control clock pulse train (CP), derived from the clock pulse train, as well as the read clock pulse train (DC) and for supplying a phase difference signal ;
d) a low-pass filter (13) for receiving said phase difference signal and for forming the control signal for said control input, the control loop realizing in a first state, a fast synchronization and in a second state a slow variation of the frequency of the clock pulse generator circuit, characterized in that for a data signal which may contain signal transitions at the beginning of a bit cell as well as at the centre of a bit cell, in dependence of the data information contained therein, in the first state a pulse element is each time directly applied as the read clock pulse train (DC) from the clock extraction device (5) to a first input of the phase comparator (11), under the control of each signal transition of the data signal, each time one half bit cell later a corresponding pulse element also being applied thereto, a second input of the phase comparator being connected to an output of a clock pulse control circuit (7) for receiving the control clock pulse train (CP) derived from the clock pulse train (DS) and having a nominal frequency (1 MHz) which amounts to twice the bit frequency, said low-pass filter (13) being adjusted to a first cut-off frequency, there being provided a detector circuit (21) for detecting the bits of the data signal interrogated under the control of the clock pulse train (DS) and for generating a synchronization signal (S), an output for said synchronization signal being connected to inputs of the clock pulse extraction device as well as of the clock pulse control circuit (7) in order to activate said second state in which the clock pulse extraction device as well as the clock pulse control circuit (7) are set to generate, under the control of each signal transition of the data signal, each time only a single pulse element of the read clock pulse train or the control clock pulse train, said low-pass filter then being switched over to a second, lower cut-off frequency.

2. An apparatus as claimed in claim 1, characterized in that the clock pulse extraction device comprises a clock pulse input for receiving from the clock pulse generator circuit a second control clock pulse train (CL) having a nominal frequency which is higher than twice the bit cell frequency, a pulse element of the read clock pulse train which is delayed with respect to the relevant signal transition being formed therefrom in conjunction with a signal transition of the medium signal.

3. An apparatus as claimed in claim 2, characterized in that the clock pulse extraction device (5) comprises a counter (39) with a set input for being set, under the control of each signal transition in the data signal, to a predetermined starting position in order to receive said second control clock pulse train as an advance signal and to supply a first signal value of said read clock pulse train before a predetermined maximum position is reached and to supply subsequently a second signal value thereof, there being provided a blocking element (41) for blocking said counter during said second setting of the apparatus after said predetermined counter position has been reached.

4. An apparatus as claimed in claim 1, 2 or 3, in which the low-pass filter comprises an RC-filter, characterized in that the cut-off frequency of the low-pass filter is changed by switching an additional resistor (R2) on/off.

5. An apparatus as claimed in claim 4, characterized in that said on/off switching of the additional resistor (R2) is controlled by means of an optical coupling element (OC) which is connected in series thereto.

## Revendications

1. Système servant à synchroniser un générateur d'impulsions d'horloge, par rapport à un signal de données sérielles, contenant des cellules de bit successives présentant des durées nominales égales et au moins une transition de signal dans une suite d'un nombre fixe prédéterminé de cellules de bit qui se succèdent directement, ce système contenant

a) un circuit d'impulsions d'horloge (16, 17) pour produire un train d'impulsions d'horloge (DS) dont la fréquence respectivement la phase est commandée par un signal de commande à l'éntrée de commande d'un circuit d'impulsions d'horloge ;

b) un dispositif d'extraction d'impulsions d'horloge (5) pour produire un train d'impulsions d'horloge de lecture (DC) à partir d'un signal de données ;

c) un comparateur de phase (11) pour la réception d'un train d'impulsions d'horloge de commande (CP) dérivé du train d'impulsions d'horloge et du train d'impulsions d'horloge de lecture (DC) et pour délivrer un signal de différence de phase ;

d) un filtre passe-bas (13) pour la réception dudit signal de différence de phase et pour la formation du signal de commande pour ladite entrée de commande et à un premier état la boucle de réglage assure une synchronisation rapide et, à un deuxième état, une variation lente de la fréquence du circuit d'impulsions d'horloge, caractérisé en ce que dans le cas d'un signal de données pouvant contenir des transitions de signal en fonction de l'information des données y contenue, tant au début qu'au centre d'une cellule de bit, un élément d'impulsion est amené chaque fois de façon directe au premier état comme train d'impulsions d'horloge de lecture (DC) sous la commande de chaque transition de signal du signal de données et, de plus, chaque fois un élément d'impulsion égal est amené après une demi-cellule de bit du dispositif d'extraction d'impulsions d'horloge (5) à une première entrée du comparateur de phase (11), une deuxième entrée du comparateur de phase étant reliée à une sortie d'un circuit de commande d'impulsions d'horloge (7) pour la réception du train d'impulsions d'horloge de commande (CP) dérivé du train d'impulsions d'horloge (DS) à une fréquence nominale (1 MHz) représentant le double de la fréquence de bit et que ledit filtre passe-bas (13) est établi à une première fréquence limite, un circuit détecteur (21) est prévu pour la détection de bits, échantillonnés sous la commande du train d'impulsions d'horloge (DS) et pour produire un signal de synchronisation (S) et qu'une sortie pour ledit signal de synchronisation est reliée à des entrées de tant le dispositif d'extraction d'impulsions d'horloge que le circuit de commande d'impulsions d'horloge (7) pour l'activation du deuxième état, auquel tant le dispositif d'extraction d'impulsions d'horloge que le circuit de commande d'impulsions d'horloge (7) sont établis pour produire, sous la commande de chaque transition de signal du signal de données, chaque fois un seul élément d'impulsion du train d'impulsions d'horloge de lecture, respectivement du train d'impulsions d'horloge de commande et dans lequel ledit filtre passe-bas est commuté à une deuxième fréquence limite qui est plus faible.

2. Système selon la revendication 1, caractérisé en ce que le dispositif d'extraction d'impulsions d'horloge présente une entrée d'impulsions d'horloge pour la réception d'un deuxième train d'impulsions d'horloge de commande (CL) présentant une fréquence nominale à partir du circuit d'impulsions d'horloge, qui dépasse le double de la fréquence de cellules de bit et qu'en coopération avec une transition de signal du signal de données, un élément d'impulsion, retardé par rapport à la transition de signal, du train d'impulsions d'horloge de lecture est formé.

3. Système selon la revendication 2, caractérisé en ce qu'un dispositif d'extraction d'impulsions d'horloge (5) contient un compteur (39) qui, sous la commande de chaque transition de signal dans le signal de données, est établi à un point de départ prédéterminé et contient le deuxième train d'impulsions d'horloge de commande comme signal de comptage et délivre une première valeur de signal mais ensuite une deuxième valeur de signal dudit train d'impulsions d'horloge de lecture avant qu'une position terminale prédéterminée ne soit atteinte, et qu'un élément de blocage (41) est prévu et assure le blocage du compteur au deuxième état du dispositif après qu'une position de comptage prédéterminée est atteinte.

4. Système selon la revendication 1, 2 ou 3, dans lequel le filtre passe-bas contient un filtre (RC), caractérisé en ce que la variation de la fréquence limite du filtre passe-bas s'effectue par branchement, respectivement débranchement, d'une résistance additionnelle (RD).

5. Système selon la revendication 4, caractérisé en ce que le branchement, respectivement le débranchement, de la résistance additionnelle .(RD) est commandé par un opto-coupleur (OC) monté en série avec ladite résistance.

FIG.1

FIG. 3

0 015 031

FIG.2

2

FIG. 4

FIG.5